# EUROPÄISCHE PATENTSCHRIFT

(11) **EP 1 231 814 B1**
(45) Veröffentlichungstag und Bekanntmachung des Hinweises auf die Patenterteilung: **25.06.2008**
(21) Anmeldenummer: 02090042.9
(22) Anmeldetag: 30.01.2002
(51) Int. Cl.: H04Q 11/04

(54) **Verfahren und Vermittlungseinrichtung zur Bereitstellung von Verbindungen in einem Telekommunikationsnetzwerk**
Method and switching system for providing connections in a telecommunications network
Procédé et dispositif de commutation pour fournir des connexions dans un réseau de télécommunications

(30) Priorität: 09.02.2001 DE 10107516
(43) Veröffentlichungstag der Anmeldung: 14.08.2002
(73) Patentinhaber: Teles AG Informationstechnologien, 10587 Berlin (DE)
(72) Erfinder: Paetsch, Frank, 10961 Berlin (DE)
(74) Vertreter: Müller, Wolfram Hubertus

(56) Entgegenhaltungen:
- WO-A-00/04692
- US-A- 6 009 106

## Beschreibung

Die Erfindung betrifft ein Verfahren zur Bereitstellung von Verbindungen in einem Telekommunikations- und/oder Computernetz gemäß dem Oberbegriff des Anspruchs 1 und eine Vermittlungseinrichtung zur Durchführung des Verfahrens.

### Hintergrund der Erfindung

Es sind TK-Systeme, z.B. TK-Anlagen, Least Cost Router und Switches/Vermittlungsstellen bekannt, die mit einem zusätzlichen IP-(Internet-Protokoll)-Modul ausgestattet sind, über das zusätzlich Verbindungen zu einem Paketvermittlungsnetz, insbesondere dem Internet, aufgebaut werden können. Dabei erfolgt über das TK-System eine Vermittlung von Sprachverbindungen, während über das IP-Modul Datenverbindungen mit paketierten Daten vermittelt werden.

Aus der PCT-Anmeldung WO 00/04692 A2 ist schon ein Verfahren bzw. eine Vermittlungseinrichtung gemäß dem Oberbegriff des Anspruchs 1 bzw. des Anspruchs 9 bekannt, wobei die Leitungen vorrangig für leitungsvermittelte Verbindungen zur Verfügung gestellt werden.

Bei diesem bekannten TK-System kann es nachteilig zu Engpässen für die IP-Datendienste kommen.

### Aufgabe der Erfindung

Der vorliegenden Erfindung liegt die Aufgabe zugrunde, ein Verfahren zur Bereitstellung von Verbindungen in einem Telekommunikations- und/oder Computernetz zur Verfügung zu stellen, das für eine Gruppe von paketvermittelten Verbindungen, die einen Vorrang besitzen, stets mindestens ein Nutzkanal zum Verbindungsaufbau bereitstellt. Zusätzlich soll eine Vermittlungseinrichtung mit dieser Funktionalität zur Verfügung gestellt werden.

### Zusammenfassung der Erfindung

Diese Aufgabe wird erfindungsgemäß durch ein Verfahren mit den Merkmalen des Anspruchs 1 und eine Vermittlungseinrichtung mit den Merkmalen des Anspruchs 9 gelöst. Bevorzugte und vorteilhafte Ausgestaltungen der Erfindung sind in den Unteransprüchen angegeben.

Danach ist erfindungsgemäß vorgesehen, daß bei einer Vermittlungseinrichtung mit einem ersten Modul, das eine erste Gruppe von Verbindungen über eine erste Anzahl von Nutzkanälen vermittelt, und einem zweiten Modul, das eine zweite Gruppe von Verbindungen über eine zweite Anzahl von Nutzkanälen vermittelt, die erste Gruppe von Verbindungen oder die zweite Gruppe von Verbindungen als gegenüber der anderen Gruppe von Verbindungen vorrangig gesetzt ist. Die Anzahl der freien Nutzkanäle der ersten Gruppe und der zweiten Gruppe von Verbindungen wird überwacht und für den Fall, daß eine vorgebbare Anzahl von Nutzkanälen des Moduls für die vorrangige Gruppe von Verbindungen nicht verfügbar ist, wird mindestens ein Nutzkanal des anderen Moduls dem Modul für die vorrangige Gruppe von Verbindungen zusätzlich zur Verfügung gestellt.

Alternativ oder ergänzend wird die Bandbreite der zu übertragenden Daten überwacht und für den Fall, daß für die Verbindungen des Moduls eine vorgegebene Bandbreite nicht ausreichend ist, um die zu übertragenden Daten ohne Stau zu übertragen, mindestens ein Nutzkanal des anderen Moduls dem Modul für die vorrangige Gruppe von Verbindungen zusätzlich zur Verfügung gestellt. Dadurch kann die Bandbreite entsprechend erhöht werden.

Durch die Erfindung wird sichergestellt, daß dem Modul für die vorrangige Gruppe von Verbindungen stets mindestens ein Nutzkanal zum Verbindungsaufbau bereitsteht.

Um dem Modul für die vorrangige Gruppe von Verbindungen einen Nutzkanal zur Verfügung zu stellen, wird, sofern nicht ein Nutzkanal des anderen Moduls gerade nicht belegt ist, ein Nutzkanal des anderen Moduls abgebaut und dann dem Modul für die vorrangige Gruppe von Verbindungen zur Verfügung gestellt. Es wird somit die Anzahl der zur Verfügung stehenden Nutzkanäle des Moduls für die niederrangige Gruppe von Verbindungen um mindestens einen Nutzkanal reduziert. Dem Modul für die vorrangige Gruppe von Verbindungen steht damit stets mindestens ein Nutzkanal zur Verfügung.

Somit besteht jederzeit die Möglichkeit, zu eingehenden oder ausgehenden Verbindungswünschen eine Verbindung herzustellen. Dies kann mit Vorteil ohne zeitliche Verzögerung erfolgen, da ein Nutzkanal bei der Gruppe von vorrangigen Verbindungen stets freigehalten wird und nicht etwa erst bei Vorliegen eines Verbindungswunsches ein belegter Nutzkanal abgebaut werden muß. Erfindungsgemäß wird es erst gar nicht zugelassen, daß alle Nutzkanäle der Gruppe von vorrangigen Verbindungen besetzt sind.

In einer vorteilhaften Ausgestaltung der Verbindung handelt es sich bei der ersten Gruppe von Verbindungen um leitungsvermittelte Verbindungen, insbesondere leitungsvermittelte Sprachverbindungen. Das erste Modul vermittelt dabei Verbindungswünsche zwischen einem Leistungsvermittlungsnetz und Telekommunikations-Endeinrichtungen wie Telefonen oder Faxgeräten.

In einer bevorzugten Ausgestaltung erfolgt eine Vermittlung von leitungsvermittelten Sprachverbindungen unter Implementierung einer Least-Cost-Routing-Funktion an eines einer Vielzahl von Leitungsvermittlungsnetzen. Sprachverbindungen werden somit an das jeweils kostengünstigste zur Verfügung stehende Leitungsvermittlungsnetz vermittelt.

Bei der zweiten Gruppe von Verbindungen handelt es sich bevorzugt um paketvermittelte Verbindungen. Dabei werden von dem zweiten Modul Verbindungen vermittelt, über die Datenpakete an ein Paketvermittlungsnetz, insbesondere das Internet, gesandt werden.

Für den Fall, daß die paketvermittelten Verbindungen als vorrangig gesetzt sind, ist zum Zurverfügungstellen eines Nutzkanals an das Modul für die paketvermittelten Verbindungen eine leitungsvermittelte Verbindung abzubauen und dann dem Modul für die paketvermittelten Verbindungen zur Verfügung zu stellen. Dies kann beispielsweise dadurch erfolgen, daß eine kurze, automatisierte Mitteilung auf dem Nutzkanal erfolgt, daß die Verbindung unterbrochen werden muß. Alternativ werden die Sprachdaten der abzubauenden Verbindung komprimiert und mit den Daten eines anderen Nutzkanals gemultiplext. An einer weiteren Vermittlungseinrichtung, etwa der lokalen Vermittlungsstelle, werden die Daten dann demultiplext und wieder auf zwei unabhängige Nutzkanäle verteilt.

Bevorzugt wird der dem Modul für die vorrangige Gruppe von Verbindungen zur Verfügung gestellte Nutzkanal dem anderen Modul wieder zur Verfügung gestellt bzw. zurückgegeben, wenn die vorgegebene Anzahl von freien Nutzkanälen oder die vorgegebene Mindestbandbreite für die vorrangige Gruppe von Verbindungen wieder zur Verfügung steht, d.h., der "ausgeliehene" Nutzkanal fällt zurück an den "Leihgeber", wenn der zusätzliche Nutzkanal von dem "Leihnehmer" nicht mehr benötigt wird.

Die erfindungsgemäße Vermittlungseinrichtung nach Anspruch 9 zeichnet sich durch Steuermittel aus, die die Anzahl der verfügbaren Nutzkanäle des ersten Moduls und des zweiten Moduls und/oder die Bandbreite der zu übertragenden Daten überwachen und für den Fall, daß eine vorgebbare Anzahl von Nutzkanälen des Moduls für die vorrangige Gruppe von Verbindungen nicht verfügbar oder eine vorgegebene Bandbreite nicht ausreichend ist, mindestens einen Nutzkanal des anderen Moduls dem Modul für die vorrangige Gruppe zusätzlich zur Verfügung stellen.

In einer vorteilhaften Ausgestaltung der Erfindung veranlassen die Steuermittel zusätzlich einen Verbindungsaufbau eines Nutzkanals, der einem anderen Modul zur Verfügung gestellt werden soll. Des weiteren ist bevorzugt vorgesehen, daß die Steuermittel Daten eines abgebauten Nutzkanals mit den Daten mindestens eines anderen Nutzkanals multiplext bzw. das Modul für die leitungsvermittelten Verbindungen hierzu veranlaßt, wobei der frei gewordene Nutzkanal dem anderen Modul zur Verfügung gestellt wird.

Die erfindungsgemäße Vermittlungseinrichtung kann teilnehmerseitig zwischen einem Endgerät oder einer TK-Anlage und der lokalen Vermittlungsstelle angeordnet sein. Es liegt jedoch ebenfalls im Rahmen der Erfindung, daß die Vermittlungseinrichtung in einen Switch oder ein Endgerät oder eine TK-Anlage integriert ist, die sowohl leitungsvermittelte Verbindungen als auch paketvermittelte Verbindungen vermitteln. Ein für einen Nutzer individualisiertes Management der Bereitstellung von Verbindungen kann dabei über eine Identifikation des Nutzers, etwa das Protokolldatenelement CLI (Calling Line Identification) erfolgen.

### Beschreibung eines Ausführungsbeispiels

Die Erfindung wird nachfolgend unter Bezugnahme auf die Figuren der Zeichnung anhand eines Ausführungsbeispiels näher erläutert. Es zeigen:
- Figur 1: schematisch die Anordnung einer erfindungsgemäßen Vermittlungseinrichtung in einer Kommunikationstruktur und
- Figur 2: schematisch den Aufbau einer erfindungsgemäßen Vermittlungseinrichtung.

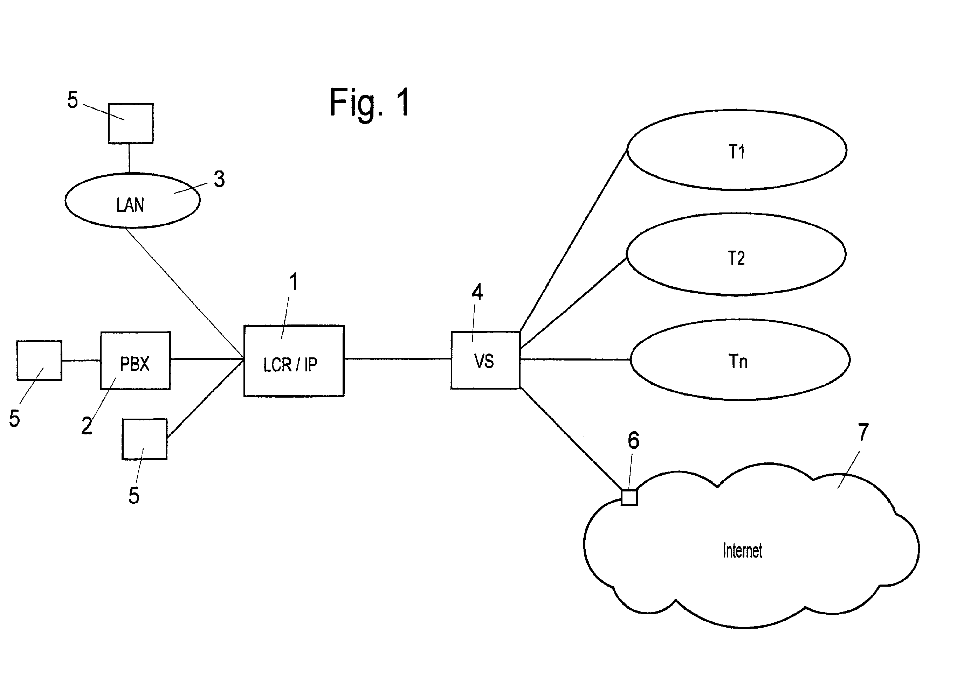

In dem Ausführungsbeispiel der Figur 1 ist eine erfindungsgemäße Vermittlungseinrichtung 1 teilnehmerseitig zwischen Endgeräten 5 und einer Vermittlungsstelle 4 eines öffentlichen oder proprietären Netzes, beispielsweise dem Netz der Deutsche Telekom AG, angeordnet. Bei den Endgeräten 5 handelt es sich beispielsweise um analoge Telefone, ISDN-Telefone, Faxgeräte oder Computer, die unmittelbar, über eine Telekommunikationsanlage (PBX) 2 oder über ein lokales Netzwerk (LAN) 3 mit der Vermittlungseinrichtung 1 verbunden sind. Bei dem lokalen Netzwerk handelt es sich beispielsweise um ein Ethernet, das paketierte Daten an die Vermittlungseinrichtung 1 sendet bzw. paketierte Daten von dieser erhält.

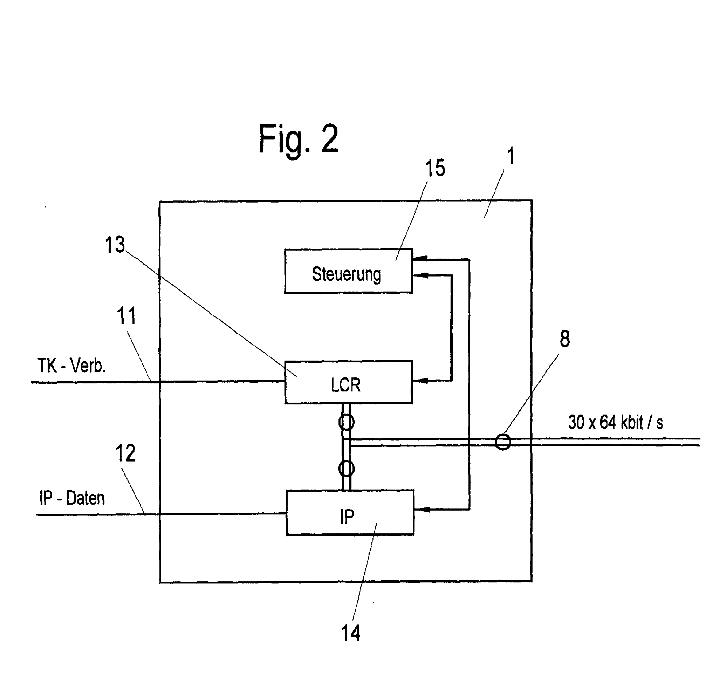

Die Vermittlungseinrichtung 1 weist, wie in bezug auf Figur 2 noch erläutert werden wird, einen Least-Cost-Router auf, der eingehende Verbindungswünsche für leitungsvermittelte Verbindungen, insbesondere Sprachverbindungen, an eines einer Vielzahl von Telekommunikationsnetzen T1,... Tn vermittelt. Dabei weist der Least-Cost-Router in an sich bekannter Weise aktualisierbare Routingtabellen auf, anhand derer für jeden Verbindungswunsch eine kostengünstige Verbindung auswählbar ist.

Gemäß Figur 1 ist in die Vermittlungseinrichtung 1 zusätzlich ein Paketvermittlungsmodul integriert, das insbesondere paketvermittelte Daten nach dem Internetprotokoll vermittelt und daher im folgenden auch als IP-Modul bezeichnet wird. Das Paketvermittlungsmodul baut über die Vermittlungsstelle 4 und einen Einwählknoten 6 eine paketvermittelte Verbindung zu einem Computernetzwerk 7, insbesondere dem Internet oder einem Intranet auf. Dabei kann das Paketvermittlungsmodul sich über einen oder mehrere Einwählknoten in das Computernetzwerk 7 und ggf. weitere Computernetzwerke einwählen.

Alternativ kann vorgesehen sein, daß die Vermittlungseinrichtung 1 in die Telekommunikationsanlage (PBX) 2 oder die Vermittlungsstelle 4 integriert ist. Weiter kann alternativ auf ein Least Cost Routing der Vermittlunbgseinrichtung 1 auch verzichtet werden, wobei die Vermittlungseinrichtung 1 dann neben dem IP Routing lediglich die Nutzkanäle mittels eines Koppelfeldes durchschaltet.

Figur 2 zeigt schematisch den funktionellen Aufbau einer erfindungsgemäßen Vermittlungseinrichtung 1. Danach weist die Vermittlungseinrichtung 1 einen ersten Eingang 11 für leitungsvermittelte Verbindungen, insbesondere Sprachverbindungen auf. Es kann sich jedoch auch um andere leitungsvermittelte Verbindungen handeln, etwa eine Faxverbindung oder eine leitungsvermittelte Verbindung zweier Computer, die unmittelbar über das Telefonnetz miteinander kommunizieren.

Die Vermittlungseinrichtung 1 weist einen zweiten Eingang 12 für paketvermittelte Daten auf. Diese Datenpakete stammen beispielsweise von einem lokalen Netzwerk (LAN 30 der Figur 1) bzw. sollen zu einem solchen Netzwerk bzw. daran angeschlossenen PC's geroutet werden.

Die Vermittlungseinrichtung 1 weist ein erstes, als LCR-Modul bezeichnetes Modul 13 auf, das die Funktionalität eines Least-Cost-Routers erfüllt und über den Eingang 11 eingehende Verbindungswünsche in Abhängigkeit von intern gespeicherten Routingtabellen an ein kostengünstiges Telekommunikationsnetz Tn routet.

Des weiteren ist ein zweites, als IP-Modul bezeichnetes Modul 14 vorgesehen, das paketierte Daten über Paketvermittlung an ein Computernetzwerk weiterleitet bzw. von dem Computernetzwerk empfangene Daten an das lokale Netzwerk weiterleitet.

Die Verbindung zwischen den beiden Modulen 13, 14 und der lokalen Vermittlungsstelle 4 des lokalen Leitungsvermittlungsnetzes, von dem aus die Verbindungen entweder an das ausgewählte Leitungsvermittlungsnetz oder an ein Paketvermittlungsnetz weitergeleitet werden, erfolgt über eine vorgegebene Anzahl von Nutzkanälen 8, im dargestellten Ausführungsbeispiel über insgesamt 30 ISDN-B-Kanäle einer Kapazität von jeweils 64 Kbit/s.

Dabei ist beispielsweise defaultmäßig vorgesehen, daß 20 B-Kanäle für die Übertragung von Sprachdaten und 10 B-Kanäle für die Übertragung von IP-Daten vorgesehen sind. Damit stehen dem IP-Modul insgesamt 640 Kbit/s für die paketvermittelte Datenübertragung zur Verfügung.

Sowohl das LCR-Modul 13 als auch das IP-Modul 14 sind mit sämtlichen Nutzkanälen verbunden, so daß jedes Modul theoretisch über sämtliche Nutzkanäle verfügen kann.

Die Nutzkanäle des IP-Moduls 13 gehen soweit möglich gebündelt an einen Einwählknoten in ein Computernetzwerk. Dabei wird bevorzugt eine Multilink PPP (point-to-point)-Verbindung aufgebaut, bei der sämtliche gebündelte Datenkanäle gleichmäßig ausgelastet und mit Datenpaketen beschickt werden.

Bei dem LCR-Modul 13 wird für jeden leitungsvermittelten Verbindungswunsch jeweils ein B-Kanal zur Vermittlungsstelle 4 belegt.

Es kann nun das Problem auftreten, daß sämtliche Nutzkanäle (B-Kanäle) für die paketvermittelten Verbindungen belegt sind. Hierdurch kann es zu Engpässen bei den Datendiensten kommen.

Erfindungsgemäß ist eine Steuereinrichtung 15 vorgesehen, die sowohl mit dem LCR-Modul 13 als auch mit dem IP-Modul 14 verbunden ist. Die Steuereinrichtung 5 prüft kontinuierlich bzw. in kurzen Abständen von einigen Millisekunden, welche Anzahl von freien Nutzkanälen dem LCR-Modul 13 und dem IP-Modul 14 zur Verfügung stehen. Alternativ oder ergänzend wird jeder Verbindungsauf- und abbau von der Steuereinrichtung 5 registriert und dadurch die Anzahl der jeweils belegten Kanäle ermittelt. Dabei ist in der Steuereinrichtung 15 vorprogrammiert bzw. über eine Tastatur einprogrammierbar, daß Verbindungen über das IP-Modul 14 einen Vorrang gegenüber Verbindungen über das LCR-Modul 13 besitzen.

Erfindungsgemäß ist es die Absicht, den paketvermittelten Verbindungen über das IP-Modul 14 den Vorrang zu geben. Hierzu ist die Steuerungseinheit 15 entsprechend zu programmieren.

Die Steuerungseinheit überwacht dabei die Bandbreite der Verbindungen, die das IP-Modul 14 vermittelt, d.h. es wird überwacht, ob die zur Verfügung stehende Bandbreite von beispielsweise 640 Kbit/s ausreicht, um die zu routenden Datenpakete ohne Stau weiterzuleiten. Dabei sollte die Bandbreite, die dem IP-Modul 14 zur Weiterleitung zur Verfügung steht, im Mittel nicht kleiner sein als die Bandbreite der am Eingang 12 eingehenden Daten.

Sofern es bei dem IP-Modul 14 zu Bandbreite-Engpässen kommt und die Differenz zwischen eingehenden und weitergeleiteten Daten einen bestimmten Wert überschreitet, wird ausgelöst durch die Steuerungseinrichtung 15 ein Nutzkanal des LCR-Moduls 13 abgebaut. Dies kann im Extremfall dadurch erfolgen, daß eine durchgeschaltete Verbindung kurzfristig gekappt ist. Ebenso ist es möglich, daß den Endteilnehmern der zu kappenden Verbindung ein kurzer Ansagetext eingespielt wird, in dem auf die Beendigung der Verbindung hingewiesen wird. Der so frei gewordene Nutzkanal kann dem IP-Modul 14 zur Verfügung gestellt werden, so daß ein weiterer Nutzkanal zur Verfügung steht und die Bandbreite der Datenübertragung zur Ortsvermittlungsstelle bzw. zum Einwahlknoten erhöht werden kann.

Alternativ ist es möglich, daß bei Aufgabe eines Nutzkanals durch das LCR-Modul 13 die Daten von mindestens zwei durchgeschalteten Verbindungen komprimiert und auf lediglich einem bzw. einer verminderten Anzahl von Nutzkanälen übertragen werden. Ein Demultiplexing und Aufteilen der Signale auf die ursprüngliche Anzahl von Nutzkanälen erfolgt dann an der Vermittlungsstelle 4.

Es wird darauf hingewiesen, daß die Steuerungseinheit 15 sowie die beiden Module 13, 14 sowohl als Hardware als auch als Software ausgebildet sein können. Sie stellen funktionelle Komponenten dar, die nicht notwendigerweise mit konkreten individuellen Bauelementen der Vermittlungseinrichtung korrespondieren, sondern auch in eine Einheit integriert bzw. als Software ausgebildet sein können. Diese Einheiten und Module können dabei in TK-Einheiten, Endgeräte oder Vermittlungsstellen integriert sein.

Weiter wird nochmals darauf hingewiesen, daß auf ein Least Cost Routing im Modul 13 auch verzichtet werden kann, wobei durch das Modul 13 dann lediglich eine Durchschaltung von Nutzkanälen realisiert wird. So kommt es erfindungsgemäß lediglich darauf an, daß die Anzahl der freien Nutzkanäle einer ersten Gruppe und einer zweiten Gruppe von Verbindungen und/oder die Bandbreite der zu übertragenden Daten überwacht wird und für den Fall, daß eine vorgebbare Anzahl von Nutzkanälen des Moduls für die vorrangige Gruppe von Verbindungen nicht verfügbar ist und/oder für die Verbindungen dieses Moduls eine vorgegebene Bandbreite nicht ausreichend ist, mindestens ein Nutzkanal des anderen Moduls dem Modul für die vorrangige Gruppe von Verbindungen zusätzlich zur Verfügung gestellt wird.

Es kommt somit erfindungsgemäß auf ein zusätzliches Zurverfügungstellen von Nutzkanälen zwischen den beiden Gruppen von Verbindungen an. Ein zusätzliches Least Cost Routing bei der einen Gruppe der Verbindungen betrifft lediglich eine Ausgestaltung der Erfindung.

Die Erfindung beschränkt sich nicht auf das vorstehend dargestellte Ausführungsbeispiel. Beispielsweise ist es ebenso möglich, eine erfindungsgemäße Vermittlungseinrichtung in einen Switch zu integrieren, der sowohl leitungsvermittelte Verbindungen als auch paketvermittelte Verbindungen vermittelt bzw. solche Verbindungen "terminiert". Dabei kann ein solcher Switch nutzerspezifisch ein entsprechendes Management der Bereitstellung von Verbindungen zur Verfügung stellen, indem der jeweilige Nutzer durch Absenderidentifikationsdaten, beispielsweise das Protokollelement CLI im ISDN-System identifiziert wird.

## Patentansprüche

1. Verfahren zur Bereitstellung von Verbindungen in einem Telekommunikations- und/oder Computernetzwerk unter Verwendung einer Vermittlungseinrichtung mit einem ersten Modul, das eine erste Gruppe von Verbindungen über eine erste Anzahl von Nutzkanälen vermittelt und einem zweiten Modul, das eine zweite Gruppe von Verbindungen über eine zweite Anzahl von Nutzkanälen vermittelt, wobei
- die erste Gruppe von Verbindungen oder die zweite Gruppe von Verbindungen als gegenüber der anderen Gruppe von Verbindungen vorrangig gesetzt ist,
- die Anzahl der freien Nutzkanäle der ersten Gruppe und der zweiten Gruppe von Verbindungen und/oder die Bandbreite der zu übertragenden Daten überwacht wird,
- für den Fall, daß eine vorgebbare Anzahl von Nutzkanälen des Moduls für die vorrangige Gruppe von Verbindungen nicht verfügbar ist und/oder für die Verbindungen dieses Moduls eine vorgegebene Bandbreite nicht ausreichend ist, mindestens ein Nutzkanal des anderen Moduls dem Modul für die vorrangige Gruppe von Verbindungen zusätzlich zur Verfügung gestellt wird,
**dadurch gekennzeichnet, daß**
- die erste Gruppe von Verbindungen leitungsvermittelte Verbindungen sind, die gegenüber der anderen Gruppe von paketvermittelten Verbindungen niederrangig gesetzt sind, und von denen ein Nutzkanal abgebaut wird, wenn die zweite Gruppe von Verbindungen einen weiteren Nutzkanal benötigt,
- die Daten des abgebauten Nutzkanals mit den Daten mindestens eines anderen Nutzkanals der ersten Gruppe gemultiplext werden, und
- der abgebaute Nutzkanal dem Modul für die vorrangige Gruppe von Verbindungen zur Verfügung gestellt wird.

2. Verfahren nach Anspruch 1, **dadurch gekennzeichnet, daß** stets ein Nutzkanal des Moduls für die vorrangige Gruppe von Verbindungen verfügbar gehalten wird.

3. Verfahren nach Anspruch 1 oder 2, **dadurch gekennzeichnet, daß** die erste Gruppe von Verbindungen leitungsvermittelte Sprachverbindungen sind und das erste Modul eingehende Verbindungswünsche an ein Leitungsvermittlungsnetz vermittelt.

4. Verfahren nach Anspruch 3, **dadurch gekennzeichnet, daß** eingehende Vermittlungswünsche unter Implementierung eines Least-Cost-Routing an eines einer Vielzahl von Leitungsvermittlungsnetzen vermittelt wird.

5. Verfahren nach mindestens einem der vorangehenden Ansprüche, **dadurch gekennzeichnet, daß** die zweite Gruppe von Verbindungen paketvermittelte Verbindungen sind und das zweite Modul die Datenverbindungen an ein Paketvermittlungsnetz, insbesondere das Internet vermittelt.

6. Verfahren nach mindestens einem der vorangehenden Ansprüche, **dadurch gekennzeichnet, daß** der dem Modul für die vorrangige Gruppe von Verbindungen zur Verfügung gestellte Nutzkanal dem anderen Modul wieder zur Verfügung gestellt wird, wenn die vorgebbare Anzahl von Nutzkanälen des Moduls für die vorrangige Gruppe von Verbindungen wieder verfügbar ist.

7. Verfahren nach mindestens einem der vorangehenden Ansprüche, **dadurch gekennzeichnet, daß** einstellbar ist, welche Gruppe von Verbindungen höherrangig ist.

8. Verfahren nach mindestens einem der vorangehenden Ansprüche, **dadurch gekennzeichnet, daß** die Nutzverbindungen des ersten Moduls und die Nutzverbindungen des zweiten Moduls ISDN-B-Kanal-Verbindungen sind, über die die erste Gruppe von Verbindungen und die zweite Gruppe von Verbindungen an einen Einwählknoten eines Leitungsvermittlungsnetzes übertragen werden.

9. Vermittlungseinrichtung zur Durchführung des Verfahrens nach Anspruch 1 mit einem ersten Modul, das eine erste Gruppe leitungsvermittelter Verbindungen über eine erste Anzahl von Nutzkanälen vermittelt und mit einem zweiten Modul, das eine zweite Gruppe von paketvermittelten Verbindungen über eine zweite Anzahl von Nutzkanälen vermittelt,
**gekennzeichnet durch**
Steuermittel (15), in denen die erste Gruppe von Verbindungen als gegenüber der anderen Gruppe von Verbindungen niederrangig gesetzt ist, wobei die Steuermittel (16) die Anzahl der verfügbaren Nutzkanäle des ersten Moduls (13) und des zweiten Moduls (14) und/oder die Bandbreite der zu übertragenden Daten überwachen und für den Fall, daß eine vorgebbare Anzahl von Nutzkanälen des Moduls (13) für die vorrangige Gruppe von Verbindungen nicht verfügbar ist und/oder für die Verbindungen dieses Moduls (14) eine vorgegebene Bandbreite nicht ausreichend ist, mindestens einen Nutzkanal des ersten Moduls für die leitungsvermittelten Verbindungen (14, 13) dem zweiten Modul (13, 14) für die vorrangige Gruppe von Verbindungen zusätzlich zur Verfügung stellen, wobei die Steuermittel (15) derart ausgebildet und konfiguriert sind, daß sie Daten eines abgebauten Nutzkanals der ersten Gruppe mit den Daten mindestens eines anderen Nutzkanals der ersten Gruppe multiplext bzw. eines der Module (14) veranlaßt, ein solches Multiplexing vorzunehmen und den dabei frei gewordenen Nutzkanal dem zweiten Modul (13) zur Verfügung stellt.

10. Vermittlungseinrichtung nach Anspruch 9, **dadurch gekennzeichnet, daß** das erste Modul (13) ein Least-Cost-Router ist, der in Abhängigkeit von bestimmten Parametern eingehende Verbindungswünsche an eines einer Mehrzahl von Leitungsvermittlungsnetzen (Tn) vermittelt.

11. Vermittlungseinrichtung nach Anspruch 9 oder 10, **dadurch gekennzeichnet, daß** das zweite Modul (14) ein Paketvermittlungsmodul ist, über das Datenverbindungen zu einem Paketvermittlungsnetz (7), insbesondere dem Internet aufbaubar sind.

12. Vermittlungseinrichtung nach mindestens einem der Ansprüche 9 bis 11, **dadurch gekennzeichnet, daß** die Steuermittel (15) einen Verbindungsabbau eines Nutzkanals veranlassen und diesen Nutzkanal dann dem anderen Modul (14) zur Verfügung stellen.

13. Vermittlungseinrichtung nach mindestens einem der Ansprüche 9 bis 12, **dadurch gekennzeichnet, daß** die Vermittlungseinrichtung in einen Switch integriert ist, der sowohl leitungsvermittelte Verbindungen als auch paketvermittelte Verbindungen vermittelt.

## Claims

1. Method for providing connections in a telecommunications and/or computer network by using a switching device having a first module which switches a first group of connections over a first number of bearer channels and having a second module which switches a second group of connections over a second number of bearer channels, wherein
- the first group of connections or the second group of connections is set to have precedence over the other group of connections
- the number of free bearer channels of the first group and of the second group of connections and/or the band width of the data to be transferred is monitored
- in the event that a predeterminable number of bearer channels of the module is not available for the higher ranking group of connections and/or a predetermined band width is not adequate for the connections of this module, at least one bearer channel of the other module is additionally made available to the module for the higher ranking group of connections
**characterised in that**
- the first group of connections are line switching connections which are set lower ranking to the other group of packet switching connections, and of which one bearer channel is disconnected when the second group of connections requires a further bearer channel
- the data of the disconnected bearer channel are multiplexed with the data of at least one other bearer channel of the first group, and
- the disconnected bearer channel is made available to the module for the higher ranking group of connections.

2. Method according to claim 1, **characterised in that** one bearer channel of the module is always kept available for the higher ranking group of connections.

3. Method according to claim 1 or 2, **characterised in that** the first group of connections are line switching voice connections and the first module switches incoming connection requests to a line switching network.

4. Method according to claim 3, **characterised in that** incoming switching requests are switched by implementing a least-cost-routing to one of a number of line switching networks.

5. Method according to at least one of the preceding claims, **characterised in that** the second group of connections are packet switching connections and the second module switches the data connections to a packet switching network, more particularly the internet.

6. Method according to at least one of the preceding claims, **characterised in that** the bearer channel made available to the module for the higher ranking group of connections is made available again to the other module when the predeterminable number of bearer channels of the module is available again for the higher ranking group of connections.

7. Method according to at least one of the preceding claims, **characterised in that** it is possible to adjust which group of connections has a higher ranking.

8. Method according to at least one of the preceding claims, **characterised in that** the usable connections of the first module and the usable connections of the second module are ISDN-B-channel-connections over which the first group of connections and the second group of connections are transferred to dial-in nodes of a line switching network,.

9. Switching device for carrying out the method according to claim 1, having a first module which switches a first group of line switching connections over a first number of bearer channels, and having a second module which switches a second group of packet switching connections over a second number of bearer channels,
**characterised by**
control means (15) in which the first group of connections is set lower ranking than the other group of connections, wherein the control means (16) monitor the number of available bearer channels of the first module (13) and of the second module (14) and/or the band width of the data to be transferred and in the event that a predeterminable number of bearer channels of the module (13) is not available for the higher ranking group of connections and/or a predeterminable band width is not adequate for the connections of this module (14), make at least one bearer channel of the first module for the line switching connections (14, 13) additionally available to the second module (13, 14) for the higher ranking group of connections, wherein the control means (15) are designed and configured so that they multiplex data of a disconnected bearer channel of the first group with that of at least another bearer channel of the first group and respectively induce one of the modules (14) to undertake such multiplexing and make the bearer channel which has thereby become free available to the second module (13).

10. Switching device according to claim 9, **characterised in that** the first module (13) is a least-cost-router which in dependence on specific parameters switches incoming connection requests to one of a number of line switching networks (Tn).

11. Switching device according to claim 9 or 10, **characterised in that** the second module (14) is a packet switching module via which data connections can be established to a packet switching network (7), more particularly the internet.

12. Switching device according to at least one of the claims 9 to 11, **characterised in that** the control means (15) cause a connection breakdown of one bearer channel and then make this bearer channel available to the other module (14).

13. Switching device according to at least one of the claims 9 to 12, **characterised in that** the switching device is integrated in a switch which switches both line switching connections and packet switching connections.

## Revendications

1. Procédé pour fournir des connexions dans un réseau de télécommunication et/ou informatique à l'aide d'un système de commutation avec un premier module, lequel commute un premier groupe de connexions via un premier nombre de canaux utiles et avec un second module, lequel commute un second groupe de connexions via un second nombre de canaux utiles, moyennant quoi
- le premier groupe de connexions ou le second groupe de connexions est considéré comme prioritaire par rapport à l'autre groupe de connexions,
- le nombre de canaux utiles libres du premier groupe et du second groupe de connexions et/ou la largeur de bande des données à transmettre est contrôlé,
- si un nombre prédéfini de canaux utiles du module n'est pas disponible pour le groupe prioritaire de connexions et/ou si une largeur de bande prédéfinie n'est pas suffisante pour les connexions de ce module, alors au moins un canal utile de l'autre module est mis en plus à la disposition du module pour le groupe prioritaire de connexions,
**caractérisé en ce que**
- le premier groupe de connexions est constitué de connexions à commutation câblée, lesquelles ne sont pas prioritaires par rapport à l'autre groupe de connexions à commutation par paquet, et pour lesquelles un canal utile est supprimé lorsqu'un second groupe de connexions nécessite un canal utile supplémentaire,
- les données du canal utile supprimé sont multiplexées avec les données d'au moins un autre canal utile du premier groupe, et
- le canal utile supprimé est mis à la disposition du module pour le groupe prioritaire de connexions.

2. Procédé selon la revendication 1, **caractérisé en ce qu'**un canal utile du module est toujours mis à disposition pour le groupe prioritaire de connexions.

3. Procédé selon la revendication 1 ou 2, **caractérisé en ce que** le premier groupe de connexions est constitué de connexions vocales à commutation câblée et **en ce que** le premier module commute des demandes de connexion entrantes à un réseau de commutation câblée.

4. Procédé selon la revendication 3, **caractérisé en ce que** les demandes de commutation entrantes sont commutés à un des nombreux réseaux de commutation câblée grâce à l'implémentation d'un routage au moindre coût.

5. Procédé selon au moins l'une quelconque des revendications précédentes, **caractérisé en ce que** le second groupe de connexions est constitué de connexions à commutation par paquet et **en ce que** le second module commute les connexions de données à un réseau de commutation par paquet, plus particulièrement à Internet.

6. Procédé selon au moins l'une quelconque des revendications précédentes, **caractérisé en ce que** le canal utile mis à la disposition du module pour le groupe prioritaire de connexions est de nouveau mis à la disposition de l'autre module lorsque le nombre prédéfini de canaux utiles du module est de nouveau disponible pour le groupe prioritaire de connexions.

7. Procédé selon au moins l'une quelconque des revendications précédentes, **caractérisé en ce qu'**il est possible de définir quel groupe de connexions est le plus prioritaire.

8. Procédé selon au moins l'une quelconque des revendications précédentes, **caractérisé en ce que** les connexions utiles du premier module et les connexions utiles du second module sont des connexions avec canal ISDN B, via lesquelles le premier groupe de connexions et le second groupe de connexions sont commutés à un noeud de sélection d'un réseau de commutation câblée.

9. Dispositif de commutation destiné à réaliser le procédé selon la revendication 1 avec un premier module, qui commute un premier groupe de connexions à commutation câblée via un premier nombre de canaux utiles et avec un second module, qui commute un second groupe de connexions à commutation par paquet via un second nombre de canaux utiles,
**caractérisé en ce que**
des moyens de commande (15), dans lesquels le premier groupe de connexions est considéré comme non prioritaire par rapport à l'autre groupe de connexions, moyennant quoi les moyens de commande (16) contrôlent le nombre de canaux utiles disponibles du premier module (13) et du second module (14) et/ou la largeur de bande des données à transmettre et, si un nombre prédéfinissable des canaux utiles du module (13) n'est pas disponible pour le groupe prioritaire de connexions et/ou si une largeur de bande prédéfinie n'est pas suffisante pour les connexions de ce module (14), lesdits moyens de commande mettent au moins, en plus à la disposition du second module (13, 14) pour le groupe prioritaire de connexions, un canal utile du premier module pour les connexions à commutation câblée (14, 13), moyennant quoi les moyens de commande (15) sont conçus et configurés de telle sorte qu'ils déterminent un des modules (14) pour effectuer le multiplexage des données d'un canal utile supprimé du premier groupe avec les données d'au moins un autre canal utile du premier groupe, afin de réaliser un tel multiplexage, et mettent ensuite à la disposition du second module (13) un canal utile qui vient d'être libéré.

10. Dispositif de commutation selon la revendication 9, **caractérisé en ce que** le premier module (13) est un routeur à moindre coût, lequel commute les demandes de connexion entrantes à une pluralité de réseaux de commutation câblée (Tn) en fonction de paramètres définis.

11. Dispositif de commutation selon la revendication 9 ou 10, **caractérisé en ce que** le second module (14) est un module de commutation par paquet, via lequel des connexions de données peuvent être assemblées dans un réseau de commutation par paquet (7), plus particulièrement vers Internet.

12. Dispositif de commutation selon au moins l'une quelconque des revendications 9 à 11, **caractérisé en ce que** les moyens de commande (15) identifient la suppression d'une connexion d'un canal utile et mettent ensuite ce canal utile à la disposition d'un autre module (14).

13. Dispositif de commutation selon au moins l'une quelconque des revendications 9 à 12, **caractérisé en ce que** le dispositif de commutation est intégré dans un commutateur, lequel commute les connexions à commutation câblée ainsi que les connexions à commutation par paquet.
